# EUROPÄISCHE PATENTSCHRIFT

(11) **EP 2 379 362 B1**
(45) Veröffentlichungstag und Bekanntmachung des Hinweises auf die Patenterteilung: **21.11.2012**
(21) Anmeldenummer: 10709174.6
(22) Anmeldetag: 22.01.2010
(51) Int. Cl.: B60K 15/03

(54) **KRAFTSTOFFBEHÄLTER MIT EINBAUTEN UND VERFAHREN ZU DESSEN FERTIGUNG**
FUEL TANK HAVING INSTALLATIONS AND METHOD FOR THE PRODUCTION THEREOF
RÉSERVOIR À CARBURANT POURVU D'ÉLÉMENTS RAPPORTÉS ET PROCÉDÉ DE FABRICATION DUDIT RÉSERVOIR

(30) Priorität: 22.01.2009 DE 102009005827
(43) Veröffentlichungstag der Anmeldung: 26.10.2011
(73) Patentinhaber: Magna Steyr Fuel Systems GesmbH, 8261 Sinabelkirchen (AT)
(72) Erfinder: DREBES, Mario, 10249 Berlin (DE); POLIFKE, Mark, 50226 Frechen (DE)
(74) Vertreter: Hano, Christian
(86) Internationale Anmeldenummer: PCT/EP2010/050741
(87) Internationale Veröffentlichungsnummer: WO 2010/084179

(56) Entgegenhaltungen:
- DE-A1-102006 059 799
- US-B1- 6 367 503

## Beschreibung

### Gegenstand

Die Erfindung betrifft einen Kraftstoffbehälter für Kraftfahrzeuge aus Kunststoff, in dessen Innerem sich Einbauten befinden. Seine Wandung kann aus einem einzigen blasgeformtem Teil mit einer ausreichend großen Öffnung oder aus zwei gepressten oder tiefgezogenen und dann miteinander verbundenen Kunststoffschalen bestehen. Bei den genannten Verformungsverfahren wird eine Form verwendet und der Kunststoff in warmem Zustand verformt. Die Wandungen können zur Minimierung der Permeation von Kraftstoffdämpfen auch mehrschichtig sein. Die Einbauten können von verschiedener Art sein, in der Regel sind es Teile eines Entlüftungssystems, nämlich Ventile, Abscheider, Ausperlbehälter und/oder Schwimmerkammern und diese verbindende Rohre oder Schläuche.

### Stand der Technik

Bei den üblichen Kraftstoffbehältern aus Kunststoff sind die Teile des Entlüftungssystems einzeln innen an der oberen Schale entweder angeschweißt (siehe zum Beispiel die EP 1 310 715A1) oder an in Durchbrechungen der Schale befestigten Schweißkronen angebracht (siehe zum Beispiel die EP 1 084 889 A1), jedenfalls aber sind die einzelnen Teile durch Rohre miteinander beziehungsweise mit der Atmosphäre verbunden. Die Teile oder Schweißkronen sind durchwegs kleinflächig.

Bei der Fertigung ist die Anbringung und Verbindung der einzelnen Teile des Entlüftungssystems und deren Verbindungsrohre an der Innenseite der Kunststoffschale arbeitsaufwändig und daher kostspielig. Besonders, wenn der Kraftstoffbehälter zur besseren Raumausnutzung in einem Personenkraftwagen zerklüftet ist und die Wandungen beziehungsweise Kunststoffteile der Wandung eine tiefe Raumform haben. Die Rohre oder Schläuche hängen dann frei im Inneren des Kraftstoffbehälters und können schwingen, was sie störungsanfällig macht und Klappergeräusche erzeugen kann. Sie an der Wandung zu befestigen, erhöht den Arbeitsaufwand weiter. Schließlich sind der Querschnitt der Rohre oder Schläuche und ihr Krümmungsradius begrenzt. Ersteres beeinträchtigt die Funktion, zweiteres engt die Gestaltungsfreiheit ein.

Aus der DE 10 2006 059 799 A1 ist ein gattungsbildender Kraftstoffbehälter aus Kunststoff bekannt, an dessen Boden ein Schwallbehälter und an dessen Plafond Profilabschnitte in der Weise befestigt sind, dass sie Flansche mit Schweißfortsätzen haben, die in die Innenwand des warm in der Form liegenden Tankteiles eingedrückt und so stoffschlüssig mit ihr verbunden sind. Schwallbehälter und Profilabschnitte stehen miteinander in keinem Zusammenhang. Es besteht keine Verbindung mit irgendwelchen Funktionsteilen.

### Problem/Lösung

Es ist somit die der Erfindung zugrunde liegende Aufgabe, die Einbauten eines aus Kunststoff bestehenden Kraftstoffbehälters so auszubilden, dass mit minimalem Arbeits- Werkzeug- und Logistikaufwand das Auslangen gefunden wird und dass sie bei hoher Raumökonomie und Gestaltungsfreiheit auch funktionell verbessert sind. Die Einbauten sollen auch für Kraftstoffbehälter komplizierter Form (insbesondere mit tief profilierter oberer Wandung) geeignet sein und sollen nicht klappern.

Erfindungsgemäß wird das mit den kennzeichnenden Merkmalen des ersten Anspruches erreicht. Dadurch dass sämtliche Einbauten zu einem Formstück zusammengefasst sind, ist eine einfache und schnelle Montage durch stoffschlüssige Verbindung mit der Wandung gegeben.

Das Formstück ist ein flächiges Bauteil mit einer offenen Raumform, es kann somit in einer einfachen Form gespritzt oder aus einem ebenen Lappen gepresst sein. Es bildet gemeinsam mit der Wandung des Kraftstoffbehälters mindestens einen Kanal. Der entsprechende Teil des Formstückes ist gewissermaßen ein "Halbrohr". Der so gebildete Kanal ersetzt das bisher übliche Rohr. Dadurch, dass der Kanal einerseits von dem Formstück und andererseits von der Wandung gebildet ist, hat er einen geschlossenen Querschnitt, ohne dass es schwingende oder klappernde Verbindungsrohre gibt. Dadurch auch kann der Querschnitt des Kanals frei gewählt werden, was eine bessere Raumökonomie und trotzdem größere Strömungsquerschnitte erlaubt. Außerdem kann der Kanal mit sehr engem Radius gekrümmt verlaufen (was ein Rohr oder einen Schlauch abknicken würde) und selbst wieder mit Einbauten und wenn nötig örtlichen Verstärkungen versehen sein.

Für den Toleranzausgleich und die Eignung für den Einbau in eine kompliziert geformte Kunststoffschale ist wesentlich, dass der Schweißflansch des Formstücks nicht nur der Raumform der Wandung des Kraftstoffbehälters, sondern auch der Kontur des Kanals folgt. Dadurch ist das Formstück kein großflächiges und wegen seiner Raumform steifes Bauteil. Der einen Kanal bildende Teil des Formstückes ist kaum breiter als der Kanal selbst. Er ist dadurch biegsam genug, geringfügige Maßabweichungen auszugleichen. Das Formstück ist rundum mit der Wandung des Kraftstoffbehälters verschweißt, die Schweißnaht bildet eine im Wesentlichen geschlossene Kurve.

Zur Verbindung mit dem Inneren des Kraftstoffbehälters hat das Formstück mindestens einen zum Inneren des Kraftstoffbehälters hin offenen mit ihm einstückigen Mundteil. Dieser kann der jeweiligen Funktion beziehungsweise dem einzubauenden Bauteil entsprechend gestaltet sein.

Über die angeführten Vorteile hinaus ist dank der Erfindung auch der Aufwand für Qualitätsprüfung und wegen der Einteiligkeit auch der für Logistik und Lagerhaltung geringer.

Insgesamt wird mit dem so gestalteten Formstück große konstruktive Freiheit gewonnen. So kann das Formstück ohne höheren Herstellungsaufwand mehrere Kanäle bilden und der eine oder andere Kanal sogar zu einem Raum erweitert sein, der einen Behälter bildet (Anspruch 2). Diese Kanäle oder auch der Behälter können mit ihm einstückige Einbauten enthalten, etwa Verstärkungen, Diaphragmen oder Schikanen, die gegebenenfalls auch mit der Wandung des Kraftstoffbehälters verbunden sind (Anspruch 3).

Ein zu einem Behälter erweiterter Kanal kann ohne Verbindung ins Innere des Kraftstoffbehälters sozusagen als Behälter im Behälter ausgebildet sein und mit außerhalb des Kraftstoffbehälters angeordneten Bauteilen in Verbindung stehen. Dasselbe gilt auch für nicht erweitere Kanäle. Zur Verbindung nach außen können in der Wandung des Kraftstoffbehälters an den jeweiligen Stellen Löcher ausgeschnitten sein. Das Formstück übergreift die zumindest eine Öffnung in der Wandung, die die Verbindung zur Atmosphäre oder zu einem externen Bauteil (zum Beispiel einem Aktivkohlefilter) herstellt. (Anspruch 4).

In Weiterbildung der Erfindung ist der Mundteil ein für die Aufnahme beispielsweise eines Ventils ausgebildeter Flansch (Anspruch 5), vorzugsweise mit Rasten oder elastischen Teilen zum Einklipsen des Ventils (Anspruch 6). Herkömmliche Ventile oder Einbauteile können aber auch auf herkömmliche Weise mit dem Formstück verschweißt sein. Weiters kann der oder ein weiterer Mundteil an einem Ende eines Kanals als Tropfenabscheider ausgebildet sein (Anspruch 7). Ein solcher besteht in einer besonders einfachen und wirksamen Ausführungsform darin, dass der Mundteil des Formstücks ein kleines Loch hat, an das nach innen eine zylindrische Leitwand anschließt und auf die eine Prallwand folgt (Anspruch 8). So kann die abgeschiedene Flüssigkeit gleich durch das Loch in den Kraftstoffbehälter zurück fließen.

Um eine dichte und haltbare Schweißverbindung zu erhalten, hat der Schweißflansch des Formstücks mindestens eine im Querschnitt keilförmige Wurzel, die im Wesentlichen normal in die Kunststoffschale eindringt (Anspruch 9). Die auf eine spitze Kante zulaufende Wurzel dringt leicht in die warme Kunststoffschale ein, sie nimmt besonders schnell deren Temperatur an und verbindet sich so fest mit ihr. Deshalb braucht das Formstück zum Einbau nicht erwärmt zu werden, was den Einbau vereinfacht.

Unter Ausnutzung der großen Gestaltungsfreiheit kann ein einen Kanal bildender Teil des Formstückes quer zu seiner Längsrichtung mindestens eine Verstärkungsrippe aufweisen (Anspruch 10), oder gleich mehrere, gleich dem Balg einer Ziehharmonika. Ersteres zur Verstärkung in Querrichtung bei Erhaltung der Biegsamkeit in Längsrichtung; zweiteres zur Erhöhung der Biegsamkeit in Längsrichtung zum Toleranzausgleich.

### Figuren

- Fig. 1:: Ansicht der oberen Schale eines erfindungsgemäßen Kraftstoffbehälters von unten,
- Fig. 2:: Axonometrische Ansicht derselben, etwas vergrößert,
- Fig. 3:: Ansicht des Formstückes der Fig. 2 mit Details, vor der Montage,
- Fig. 4:: Detail einer Variante,
- Fig. 5:: Detail einer weiteren Variante,
- Fig. 6:: Ansicht einer weitergebildeten Ausführungsform eines erfindungsgemäßen Kraftstoffbehälters von unten,
- Fig. 7:: Schnitt nach VII-VII zu Fig. 6,
- Fig. 8:: Detail VIII in Fig. 7.

### Beschreibung

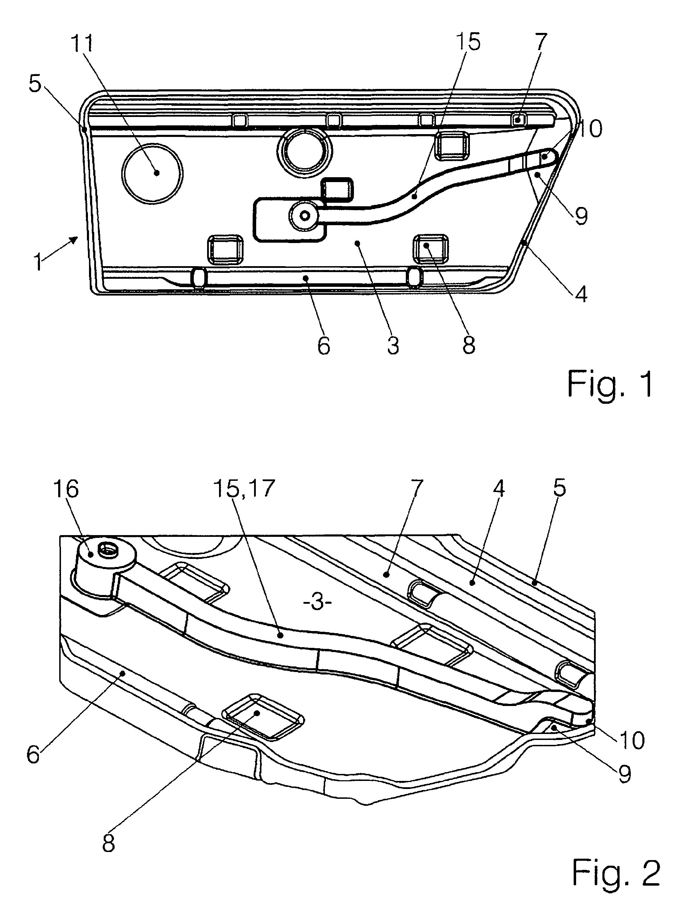

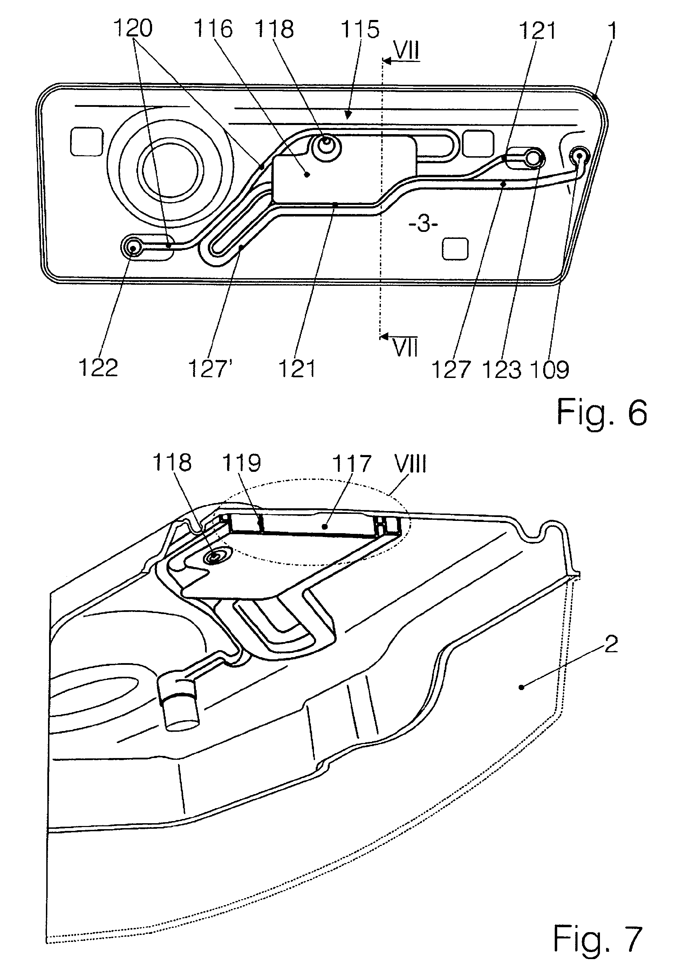

In den Fig. 1 und 2 ist bei einem aus zwei Teilen zusammengesetzten Kraftstoffbehälter die erste - obere - Kunststoffschale summarisch mit 1 bezeichnet, die zweite - untere - Kunststoffschale 2 ist in Fig.7 strichliniert angedeutet. Die obere Wandung, hier die erste Kunststoffschale 1, besteht aus einem großflächigen Plafond 3, der uneben sein kann, aus rundum einer Seitenwand 4 und aus einem von der Seitenwand 4 nach außen gebördelten Verschweißflansch 5. Die Kunststoffschale 1 hat zur Versteifung längliche Verstärkungssicken 6,7 und rechteckige Verstärkungsdellen 8. An einer Stelle bildet sie eine Stufe 9 mit einem ersten Loch 10, durch das eine Verbindung ins Freie oder zu einem anderen Bauteil, etwa einem Aktivkohlefilter besteht. Dieses Loch 10 wird gegebenenfalls erst nach Anbringung der Einbauten ausgeschnitten. Ein zweites größeres Loch 11 ist für den Einbau einer Pumpeinheit oder dergleichen (nicht dargestellt) gedacht, könnte bei einem einteilig blasgeformten Kraftstoffbehälter auch für das Einbringen weiterer Einbauten, benutzt werden.

Die weiteren Einbauten, insbesondere die für die Entlüftung, sind zu einem erfindungsgemäßen Formstück 15 zusammengefasst. In Fig. 1 ist es in seiner einfachsten Form abgebildet, in der es nur aus einem "Halbrohr" 17 und einem Mundteil 16 besteht. Der vom Formstück 15 zusammen mit der Wandung des Kraftstoffbehälters, der ersten Kunststoffschale 1, gebildete Kanal hat hier einen geschlossenen rechteckigen Querschnitt.

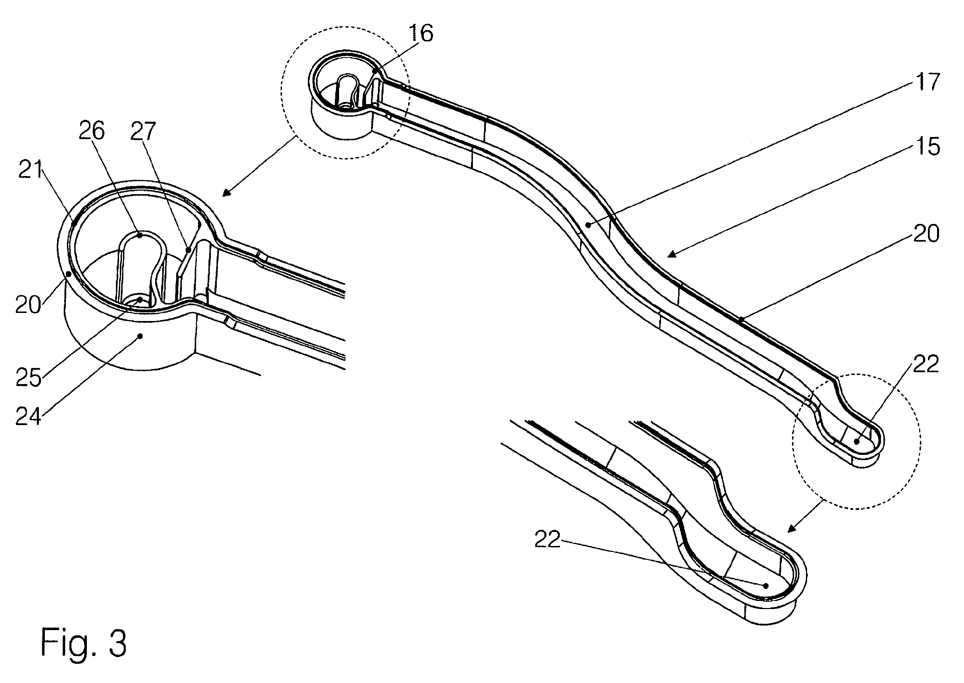

Fig. 3 zeigt dieses Formstück 15 im Detail. Das Halbrohr 17 verlauft zuerst eben in einer Kurve und endet in einem abgesenkten Versatz 22, der auf die Stufe 9 mit dem nach außen führenden ersten Loch 10 der Kunststoffschale 1 passt. Der Mundteil 16 am anderen Ende des Halbrohres 17 ist hier als Flüssigkeitsfalle ausgebildet. Rundum das gesamte Formstück lauft ununterbrochen (auch über den Versatz 22) ein Schweißflansch 20 mit einer Wurzel 21 (dazu siehe weiter unten).

Der als Flüssigkeitsfalle ausgebildete Mundteil 16 ist im Grundriss ein Zylindermantel 24 und hat in der Mitte ein ins Innere des Behälters hin offenes Loch 25. Dieses ist an einem Teil seines Umfanges von einer bis zur Ebene des Schweißflansches 20 und zum Zylindermantel 24 reichenden Leitwand 26 umgeben. Am Übergang vom Zylindermantel 24 zum Halbrohr 17 ist noch eine ebenso hohe Prallwand 27. Durch das Loch 25 eintretende mit Tröpfchen beladene Dämpfe werden zwischen dem Zylindermantel 24 und der Leitwand 26 in einer Kreisbahn geführt und prallen dann an die Prallwand 27. Durch die Fliehkraft und die Prallwand werden die Tröpfchen abgeschieden. Sie laufen durch das Loch 25 zurück in den Behälter.

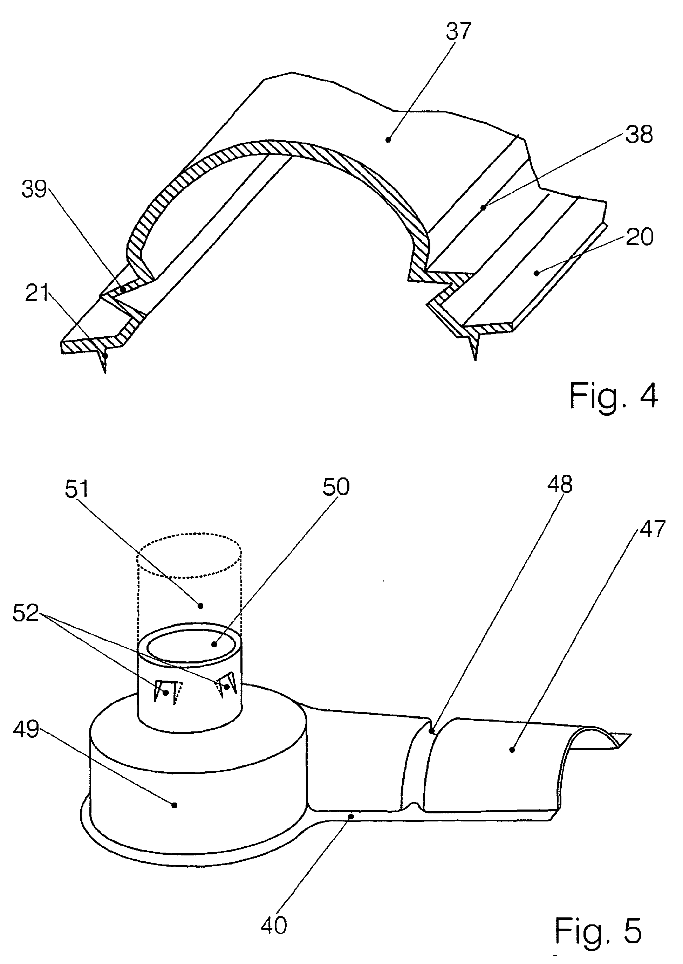

Die Variante der Fig. 4 zeigt ein Halbrohr 37, hier mit halbkreisförmigem Querschnitt. Der Übergang von diesem zu seinem Schweißflansch 20 mit der Wurzel 21 ist hier als längs gerichteter Balg 38,39 ausgebildet. Dazu sind die Wandteile des Halbrohres 37 im Querschnitt zickzackförmig. Dadurch kann sich der biegsame Schweißflansch Unebenheiten oder Toleranzen besser anpassen.

Die Variante der Fig. 5 zeigt ein Halbrohr 47, das durch eine quer verlaufende Rippe 48 in Querrichtung versteift ist. Die Rippe 48 kann nach innen (wie abgebildet) oder nach außen gewölbt sein. Wenn mehrere solcher Rippen aufeinander folgen, ist das Halbrohr in Längsrichtung biegeweich und geringfügig längenveränderlich. Der Mundteil 49 hat hier einen zylindrischen Steckflansch 50 mit über den Umfang verteilt mindestens zwei Rasten 52. In diesen kann ein nur strichliniert angedeutetes Ventil eingesetzt und mit den Rasten 52 verklipst sein.

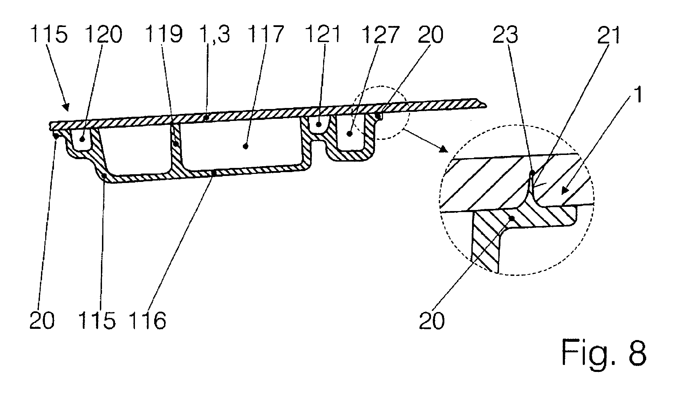

In den Fig. 6, 7 und 8 ist ein Ausführungsbeispiel mit einer komplizierten Entlüftungsvorrichtung zu sehen, bei dem die Vorteile der Erfindung besonders wirksam sind. Das Formstück 115 ist hier mit einer Reihe von Kanälen einstückig, aber trotzdem nur ein offener flächiger Teil. Einer der Kanäle ist zu einem Ausperlbehälter 116 mit einem Raum 117 erweitert. Der Raum 117 hat eine Leitwand 119 und steht über eine Öffnung 118 mit dem Inneren des Kraftstoffbehälters in Verbindung. Der Raum 117 des Ausperlbehälters 116 steht weiters über einen ersten Verbindungskanal 120 und einen zweiten Verbindungskanal 121 mit Mundteilen 122 beziehungsweise 123 in Verbindung. Diese können als Flüssigkeitsfalle wie in Fig. 3 oder als Steckflansch für ein Ventil (wie in Fig. 5) ausgebildet sein. Sie sind an voneinander entfernten Regionen des Kraftstoffbehälters angeordnet, um die Entlüftung lageunabhängig zu machen. Die Verbindungskanäle 121,122 haben einen relativ kleinen Querschnitt, aber trotzdem ihrem Verlauf folgend beiderseits ihre Schweißflansche. Wo sie an dem Ausperlbehälter 116 entlang geführt sind, sind sie mit ihm vereint (siehe Fig. 8).

Von dem Ausperlbehälter 116 führt ein Entlüftungskanal 127 größeren Querschnittes zu einem Endteil 109, der auch dicht mit der Kunststoffschale 1 verbunden ist und das nach außen führende Loch 10 umgibt. Auch dieser Entlüftungskanal 127 mit seiner Schlinge 127' hat einen seiner Kontur eng folgenden Schweißflansch. Wo er an dem Ausperlbehälter 116 entlang geführt sind, ist er mit ihm vereint (siehe Fig. 8).

In Fig. 8 wird deutlich, dass das Formstück 115 einstückig den Ausperlbehälter 116, die Verbindungskanäle 120, 121 und den Entlüftungskanal 127 bildet. Im eingekreisten Detail ist zu sehen, wie die eine scharfe Schneide 23 bildende Wurzel 21 des rundum das ganze Formstück umgebenden Schweißflansches 20 in die Kunststoffschale eingedrungen ist. In derselben Weise kann auch die Leitwand 119 und weitere Zwischenwände mit der Kunststoffschale 1 verbunden sein.

Bei der Herstellung eines erfindungsgemäßen Kraftstoffbehälters wird das Formstück entweder in einer einfachen kernlosen Form gespritzt oder aus einer ebenen Kunststoffplatte gepresst. Der Kraftstoffbehälter wird entweder geblasen oder seine Teile, hier die beiden Kunststoffschalen werden in der üblichen Weise gepresst oder gespritzt. Dazu wird er oder die jeweilige Kunststoffschale auf eine Temperatur gebracht, in der der Kunststoff weich und durch Anpressen des Formstückes mit ihm verschweißbar ist. Sobald die Form zur Herstellung der Kunststoffschale geöffnet und die Schale noch heiß ist, beziehungsweise sobald der Blasvorgang beendet ist, wird das kalte Formstück in die noch in der Form befindliche Kunststoffschale eingedrückt. Dank der sich verjüngenden Wurzel 21 des Schweißflansches 20 erfordert das nicht nur eine geringe Einpresskraft.

Der große Vorteil liegt darin, dass die Region der Wurzel nahe der Schneide 23 so dünn ist, dass sie sogleich nach dem Eindringen in die Kunststoffschale 1 aufschmilzt und mit letzterer eine besonders feste und dichte Verbindung eingeht. In der Folge verbinden sich auch die dickeren Regionen des keilförmigen Querschnittes der Wurzel 21 und der Schweißflansch 20 mit der Kunststoffschale 1. Sofern in einen der Mundteile ein Ventil einzusetzen ist, so kann das gleich danach oder auch vorher geschehen. Wenn es sich um einen aus mehreren Teilen bestehenden Kraftstoffbehälter handelt, werden schließlich die beiden Kunststoffschalen 1,2 entlang ihrer Verschweißflansche 5 miteinander verbunden.

## Patentansprüche

1. Kraftstoffbehälter aus Kunststoff, in dessen Inneren sich Einbauten befinden, wobei an der Innenseite der Wandung (1) des Kraftstoffbehälters oder eines Teiles (1,2) dessen ein Formstück (15; 115) angebracht und mit der Wandung (1) stoffschlüssig verbunden ist,
a) wobei das Formstück (15; 115) eine offene Raumform hat und zusammen mit der Innenseite der Wandung (1) mindestens einen Kanal (17; 116,120,121, 127) bildet, und
b) wobei das Formstück (15; 115) rundum mit der Wandung (1) verschweißt ist, und ein eine im Wesentlichen geschlossene Kurve bildender Schweißflansch (20;40) der Kontur des mindestens einen Kanals (17; 116,120,121, 127) folgt,
**dadurch gekennzeichnet, dass**
c) das Formstück (15; 115) zumindest Teil einer Entlüftungsvorrichtung ist, und
d) das Formstück (15; 115) mindestens einen Kanal (17; 120,121,127) bildet, der mit einem zur Behälterinnenseite offenen Ende einen mit ihm einstückigen Mundteil (16; 49,50; 122,123) hat.

2. Kraftstoffbehälter nach Anspruch 1, **dadurch gekennzeichnet, dass** das Formstück mehrere Kanäle (120, 121, 127) bildet und ein Kanal (116) zumindest örtlich dergestalt erweitert ist, dass er mit der Wandung (1) einen Behälter (116) mit einem Innenraum (117) bildet.

3. Kraftstoffbehälter nach Anspruch 1, **dadurch gekennzeichnet, dass** das Formstück (15; 115) Einbauten (26,27; 119) enthält, die mit ihm einstückig sind.

4. Kraftstoffbehälter nach Anspruch 1, **dadurch gekennzeichnet, dass** das Formstück (15; 115) eine Öffnung (10) in der Wandung übergreift, die die Verbindung zur Atmosphäre oder zu einem externen Bauteil herstellt.

5. Kraftstoffbehälter nach Anspruch 1, **dadurch gekennzeichnet, dass** der Mundteil (49) ein für die Aufnahme eines Ventils (51) oder dergleichen ausgebildeter Flansch ist.

6. Kraftstoffbehälter nach Anspruch 5, **dadurch gekennzeichnet, dass** der Flansch (50) Rasten (52) oder elastische Teile zum Einklipsen des Ventils oder dergleichen hat.

7. Kraftstoffbehälter nach Anspruch 1, **dadurch gekennzeichnet, dass** der Mundteil (16) an einem Ende eines Kanals (17) als Tropfenabscheider ausgebildet ist.

8. Kraftstoffbehälter nach Anspruch 7, **dadurch gekennzeichnet, dass** der Mundteil (16) zur Bildung eines Tropfenabscheiders ein zum Inneren des Kraftstoffbehälters hin offenes Loch (25) hat, an das nach innen eine zylindrische Leitwand (26) anschließt, auf die eine Prallwand (27) folgt.

9. Kraftstoffbehälter nach Anspruch 1, **dadurch gekennzeichnet, dass** der Schweißflansch (20;40) mindestens eine im Querschnitt keilförmige Wurzel (21) aufweist, die im Wesentlichen normal in die Kunststoffschale (1) eindringt.

10. Kraftstoffbehälter nach Anspruch 1, **dadurch gekennzeichnet, dass** ein einen Kanal bildender Teil (47) des Formstückes (15; 115) quer zu seiner Längsrichtung mindestens eine Verstärkungsrippe (48) aufweist.

## Claims

1. Fuel tank made from plastic, in the interior of which installations are located, a moulding (15; 115) being attached to the inside of the wall (1) of the fuel tank or of a part (1, 2) thereof and being connected to the wall (1) in a materially integral manner,
a) the moulding (15; 115) having an open three-dimensional shape and forming, together with the inside of the wall (1), at least one channel (17; 116, 120, 121, 127), and
b) the moulding (15; 115) being welded all-round to the wall (1), and a welding flange (20; 40) which forms an essentially closed curve following the contour of the at least one channel (17; 116, 120, 121, 127),
**characterized in that**
c) the moulding (15; 115) is at least part of a venting device, and
d) the moulding (15; 115) forms at least one channel (17; 120, 121, 127) which with an end open to the tank inside has a mouth part (16; 49, 50; 122, 123) which is in one piece with the said end.

2. Fuel tank according to Claim 1, **characterized in that** the moulding forms a plurality of channels (120, 121, 127), and one channel (116) is widened at least locally in such a way that it forms with the wall (1) a container (116) having an inner space (117).

3. Fuel tank according to Claim 1, **characterized in that** the moulding (15; 115) contains installations (26, 27; 119) which are in one piece with it.

4. Fuel tank according to Claim 1, **characterized in that** the moulding (15; 115) overlaps an orifice (10) which is located in the wall and which makes the connection to the atmosphere or to an external component.

5. Fuel tank according to Claim 1, **characterized in that** the mouth part (49) is a flange designed for receiving a valve (51) or the like.

6. Fuel tank according to Claim 5, **characterized in that** the flange (50) has catches (52) or elastic parts for snapping in the valve or the like.

7. Fuel tank according to Claim 1, **characterized in that** the mouth part (16) is designed at one end of a channel (17) as a drop separator.

8. Fuel tank according to Claim 7, **characterized in that** the mouth part (16) has, to form a drop separator, a hole (25) which is open to the interior of the fuel tank and which has adjoining it inwardly a cylindrical guide wall (26) followed by a baffle wall (27).

9. Fuel tank according to Claim 1, **characterized in that** the welding flange (20; 40) has at least one root (21) of wedge-shaped cross section which penetrates essentially perpendicularly into the plastic shell (1).

10. Fuel tank according to Claim 1, **characterized in that** a channel-forming part (47) of the moulding (15; 115) has transversely to its longitudinal direction at least one reinforcing rib (48).

## Revendications

1. Réservoir à carburant en plastique, à l'intérieur duquel se trouvent des éléments rapportés, une pièce moulée (15 ; 115) étant appliquée contre le côté intérieur de la paroi (1) du réservoir à carburant ou d'une partie (1, 2) de ce dernier et étant reliée à la paroi (1) par liaison de matière,
a) la pièce moulée (15 ; 115) ayant une forme spatiale ouverte et formant, conjointement avec le côté intérieur de la paroi (1), au moins un canal (17 ; 116, 120, 121, 127) et
b) la pièce moulée (15 ; 115) étant soudée sur toute sa périphérie sur la paroi (1) et une bride à souder (20 ; 40) formant une courbe essentiellement fermée suivant le contour de l'au moins un canal (17 ; 116, 120, 121, 127), **caractérisé en ce que**
c) la pièce moulée (15 ; 115) fait au moins partie d'un dispositif de ventilation et
d) la pièce moulée (15 ; 115) forme au moins un canal (17 ; 120, 121, 127) qui, avec une extrémité ouverte en direction du côté intérieur du réservoir, a une partie d'embouchure (16 ; 49, 50 ; 122, 123) faisant corps avec ce dernier.

2. Réservoir à carburant selon la revendication 1, **caractérisé en ce que** la pièce moulée forme plusieurs canaux (120, 121, 127) et un canal (116) est au moins localement élargi, de telle sorte qu'il forme avec la paroi (1) un réservoir (116) doté d'un espace intérieur (117).

3. Réservoir à carburant selon la revendication 1, **caractérisé en ce que** la pièce moulée (15 ; 115) comprend des éléments rapportés (26, 27 ; 119) qui font corps avec elle.

4. Réservoir à carburant selon la revendication 1, **caractérisé en ce que** la pièce moulée (15 ; 115) recouvre une ouverture (10) dans la paroi qui réalise la liaison à l'atmosphère ou à un composant externe.

5. Réservoir à carburant selon la revendication 1, **caractérisé en ce que** la partie d'embouchure (49) est une bride réalisée pour recevoir une soupape (51) ou similaire.

6. Réservoir à carburant selon la revendication 5, **caractérisé en ce que** la bride (50) a des crans (52) ou des parties élastiques pour enclipser la soupape ou similaire.

7. Réservoir à carburant selon la revendication 1, **caractérisé en ce que** la partie d'embouchure (16) est réalisée sous forme de séparateur de gouttes à une extrémité d'un canal (17).

8. Réservoir à carburant selon la revendication 7, **caractérisé en ce que** la partie d'embouchure (16) a un trou (25) ouvert en direction de l'intérieur du réservoir à carburant pour former un séparateur de gouttes, auquel trou se raccorde vers l'intérieur une paroi de guidage cylindrique (26) suivie par une paroi déflectrice (27).

9. Réservoir à carburant selon la revendication 1, **caractérisé en ce que** la bride à souder (20 ; 40) comprend au moins une racine (21) en forme de coin en section transversale qui pénètre essentiellement de manière normale dans l'enveloppe en plastique (1).

10. Réservoir à carburant selon la revendication 1, **caractérisé en ce qu'**une partie (47) de la pièce moulée (15 ; 115) formant un canal comprend, transversalement à sa direction longitudinale, au moins une nervure de renforcement (48).
